# EUROPEAN PATENT SPECIFICATION

(11) **EP 2 196 361 B1**
(45) Date of publication and mention of the grant of the patent: **25.09.2013**
(21) Application number: 08021347.3
(22) Date of filing: 09.12.2008
(51) Int. Cl.: B60R 21/0136

(54) **System for detecting an impact of a motor vehicle**
Vorrichtung zur Detektierung eines Fahrzeugaufpralls
Système pour la détection de l'impact d'une voiture

(43) Date of publication of application: 16.06.2010
(73) Proprietor: Autoliv Development AB, 447 83 Vårgårda (SE)
(72) Inventor: Marguerie, Julien, 92400 Courbevoie (FR)
(74) Representative: Müller Verweyen

(56) References cited:
- DE-A1- 10 345 727
- DE-A1-102004 038 984
- US-A1- 2007 005 207

## Description

The invention relates to a system for detecting an impact of a motor vehicle.

A conventional system for detecting a frontal impact of a motor vehicle is known which comprises a front sensor for generating a frontal impact signal and a central sensor for generating a frontal impact confirmation signal. For safety reasons a safety device, for example airbag, pretensioner and/or active head rest, is activated only if both a frontal impact signal and a frontal impact confirmation signal are generated. Similarly a conventional system for detecting a rear impact comprises two central sensors, one for generating a rear impact signal and one for generating a rear impact confirmation signal, where a safety device may be activated only if both a rear impact signal and a rear impact confirmation signal are generated.

DE 103 45 727 A1 discloses a system according to the preamble of claim 1 with a rear pressure sensor adapted to detect a rear impact within a few milliseconds. A confirmation signal is taken for example from an up-front sensor.

The object of the invention is to provide a simple and cost-effective system for detecting a frontal and/or rear impact of a motor vehicle.

The invention solves this object with the features of claim 1. In a system for detecting a frontal impact of a motor vehicle the signal from the rear sensor can be used for confirming a frontal impact instead of a signal from a central sensor. A central impact sensor can then be dispensed with. In the same manner in a system for detecting a rear impact of a motor vehicle the signal from the frontal sensor can be used for confirming a rear impact instead of a signal from a central sensor. Therefore a front sensor and a rear sensor can be uniformly used for different types of impact determination systems which is very cost-effective.

Preferably the system is adapted to detect both a frontal impact and rear impact depending on signals from both said front sensor and said rear sensor.

Preferably the evaluation device is adapted to classify different types of events from different conditions of said front and rear sensor signals, in particular a high severity impact for example according to the ODB (offset deformable barrier) test, a low severity impact for example according to the AZT (Allianz Zentrum für Technik) test, non-impact events like misuse, etc. In order to achieve this, the evaluation device is preferably adapted to determine not only the amplitude and the sign but also the timing of the signals from the impact sensors, e.g. by employing a time-dependent threshold for the sensor signal.

In the following the invention shall be illustrated on the basis of preferred embodiments with reference to the accompanying drawings, wherein:
- Fig. 1: shows a top view onto a motor vehicle;
- Fig. 2: shows a schematic diagram of an impact detection system; and
- Fig. 3: shows a schematic diagram of an impact detection system in another embodiment.

The motor vehicle 10 comprises an impact detection system 22 with impact sensors 11 to 14, namely a front impact sensor 11, a rear impact sensor 12, a left side impact sensor 13 and a right side impact sensor 14. The front impact sensor 11 is mounted to the vehicle chassis in the front region 15 of the motor vehicle 10. The front region 15 is a region of a length df behind the foremost point 16 of the vehicle 10. The length df may be 25% or 20% of the total vehicle length. The rear impact sensor 12 is mounted to the vehicle chassis in the rear region 17 of the motor vehicle 10. The rear region 17 is a region of a length db forward of the rearmost point 18 of the vehicle 10. The length db may be 25% or 20% of the total vehicle length. The left impact sensor 13 is mounted to the vehicle chassis in the left region 19 of the motor vehicle 10. The left region 19 is a region of a length dl to the right of a leftmost point of the vehicle 10. The length dl may be 25% or 20% of the total vehicle width. The right impact sensor 13 is mounted to the vehicle chassis in the right region 20 of the motor vehicle 10. The right region 20 is a region of a length dr to the left of a rightmost point of the vehicle 10. The length dr may be 25% or 20% of the total vehicle width. The regions 15, 17, 19 and 20 enclose a central region 21 of the vehicle 10. Preferably the front and rear impact sensors 11, 12 are accelerometers with their axis being aligned with the longitudinal vehicle axis L.

The impact detection system 22 comprises an evaluation device 23, in particular a programmable/programmed electronic device preferably comprising a microcontroller. The evaluation device 23 can for example be realised a central onboard ECU of the vehicle 10. The evaluation device 23 is connected to the sensors 11 to 14 by signal lines, for example via an on-board data bus. The evaluation device 23 is furthermore connected by signal lines to one or more reversible and/or irreversible safety devices 26 to 28 comprising in particular airbags 26, pretensioners 27 and/or active head rests 28.

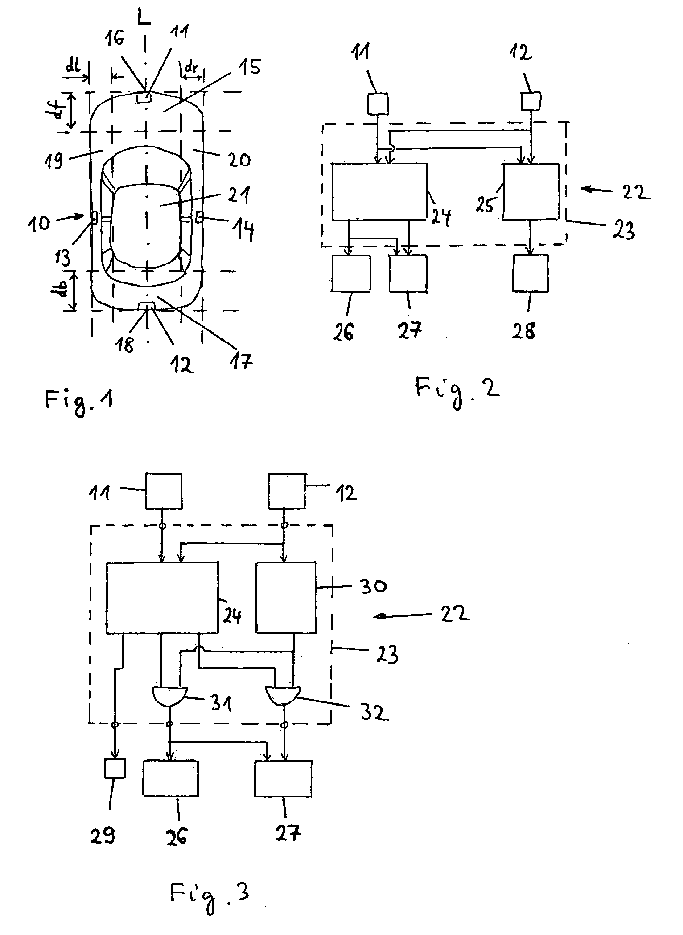

The embodiment shown in Fig. 2 shows a system 22 adapted to detect a frontal impact and a rear impact. Consequently, the evaluation device 23 comprises means 24 for detecting a frontal impact and means 25 for detecting a rear impact. The means 24 for detecting a frontal impact is programmed to execute a frontal impact detection algorithm adapted to determine a frontal impact if a predetermined condition based on a signal from the front sensor 11 and a signal from the rear sensor 12 is received. Preferably the means 24 for detecting a frontal impact is furthermore adapted to classify different types of impacts based on different conditions of the signals from the front impact sensor 11 and the rear impact sensor 12. In order to achieve this, the evaluation device 23 is preferably adapted to determine the amplitude and the timing of the signals from the impact sensors 11, 12, e.g. by employing a time-dependent threshold for the corresponding sensor signals.

The means 24 preferably is adapted to activate different safety devices based on a determined impact type. For example if a high severity impact is determined, both an airbag 26 and, if present, a pretensioner 27 are activated which corresponds to the left output of the means 24 in Fig. 2. On the other hand, if a low severity impact is determined, only a pretensioner 27, if present, may be activated which corresponds to the right output of the means 24 in figure 2.

In this embodiment the means 25 for detecting a rear impact is programmed to execute a rear impact detection algorithm adapted to determine a rear impact if a predetermined condition based on a signal from the front sensor 11 and a signal from the rear sensor 12 is received, and to activate a safety device 28, for example an active head rest, if a rear impact has been determined.

The embodiment shown in Fig. 3 shows a system 22 for detecting a frontal impact, only. Such a system could of course be combined with means for detecting a rear impact. The evaluation device 23 comprises means 24 for detecting a frontal impact and means 30 for confirming a frontal impact. The means 24 is designed as described above and may furthermore be adapted to classify a non-impact event, for example an event due to misuse by hammer blow, etc. The impact detection system 22 preferably comprises a memory device 29 in which data indicating a non-impact event may be stored for later analysis in case the means 24 detects a non-impact event.

In this embodiment the means 30 for confirming a frontal impact is programmed to execute a frontal impact confirmation algorithm adapted to determine/confirm a frontal impact if a predetermined condition based on a signal from the rear sensor 12 is received. If a high severity impact is determined by the means 24, both an airbag 26 and a pretensioner 27 are activated only if additionally the frontal impact is confirmed by the frontal impact confirmation means 30, symbolized by the AND gate 31. On the other hand, if a low severity impact is determined by the means 24, a pretensioner 27 is activated only if additionally the frontal impact is confirmed by the frontal impact confirmation means 30, symbolized by the AND gate 32. Of course the AND gates 31, 32 do not have to be physical AND gates but can be realised by software.

It follows from the above that the system 22 is adapted to detect a frontal impact and/or a rear impact without need for an impact confirmation sensor in the central area 21 of the vehicle 10. Therefore the central area 21 of the vehicle 10 can advantageously be free of any impact sensor.

## Claims

1. A system (22) for detecting an impact of a motor vehicle (10), comprising at least one front sensor (11) located at or close to a front end of the vehicle (10) and adapted to create a front sensor signal in response to a vehicle impact, wherein said front sensor (11) is an accelerometer, at least one rear sensor (12) located at or close to a rear end of the vehicle (10) and adapted to create a rear sensor signal in response to a vehicle impact, and an evaluation device (23) adapted to create an activation signal for activating at least one safety device (26, 27, 28) in response to receiving a sensor signal, wherein said evaluation device (23) is adapted to create an activation signal for activating at least one safety device (26, 27, 28) if a predetermined condition depending on both a front sensor signal and a rear sensor signal is fulfilled, and wherein said system (22) is adapted to detect a rear impact depending on both a front sensor signal and a rear sensor signal, **characterized in that** said rear sensor (12) is an accelerometer and said system (22) is adapted to detect a frontal impact depending on both a front sensor signal and a rear sensor signal.

2. The system according to claim 1, wherein said system (22) is adapted to detect both a frontal impact and a rear impact depending on both a front sensor signal and a rear sensor signal.

3. The system according to claim 1, wherein said accelerometer has at least a component of its sensitivity axis arranged parallel to a longitudinal vehicle axis (L).

4. The system according to any one of the preceding claims, wherein said evaluation device (23 is adapted to classify different types of events from different conditions of said front and rear sensor signals.

5. The system according to claim 4, wherein said evaluation device (23) is adapted to distinguish a high severity impact from a low severity impact.

6. The system according to claim 4 or 5, wherein said evaluation device (23) is adapted to distinguish a non-impact event from an impact.

7. The system according to and any one of claims 4 to 6,
wherein said evaluation device (23) is adapted to classify said different types of events on the basis of amplitude and timing of said front and rear sensor signals.

8. The system according to any one of the preceding claims,
wherein said evaluation device (23) is adapted to calculate a confirmation signal from one of said front or rear sensor signals.

9. The system according to any one of the preceding claims,
wherein said system (22) furthermore comprises side impact sensors (13, 14).

10. The system according to any one of the preceding claims,
wherein all impact sensors (11-14) of said system (22) are arranged outside a central region (21) of the vehicle (10).

## Patentansprüche

1. System (22) zum Detektieren eines Aufpralls eines Kraftfahrzeugs (10), das mindestens einen Frontsensor (11) umfasst, der sich an oder nahe einem vorderen Ende des Fahrzeugs (10) befindet und so ausgelegt ist, dass er ein Frontsensorsignal als Reaktion auf einen Fahrzeugaufprall erzeugt, wobei der Frontsensor (11) ein Beschleunigungssensor ist, mindestens einen Hecksensor (12), der sich an oder nahe einem hinteren Ende des Fahrzeugs (10) befindet und so ausgelegt ist, dass er ein Hecksensorsignal als Reaktion auf einen Fahrzeugaufprall erzeugt, und eine Auswerteeinrichtung (23), die so ausgelegt ist, dass sie ein Aktivierungssignal zum Aktivieren von mindestens einer Sicherheitsvorrichtung (26, 27, 28) als Reaktion auf den Empfang eines Sensorsignals erzeugt, wobei die Auswerteeinrichtung (23) so ausgelegt ist, dass sie ein Aktivierungssignal zum Aktivieren von mindestens einer Sicherheitsvorrichtung (26, 27, 28) erzeugt, wenn eine vorgegebene Bedingung erfüllt ist, die sowohl von einem Frontsensorsignal als auch einem Hecksensorsignal abhängig ist, und wobei das System (22) so ausgelegt ist, dass es abhängig von sowohl einem Frontsensorsignal als auch einem Hecksensorsignal einen Heckaufprall detektiert, **dadurch gekennzeichnet, dass** der Hecksensor (12) ein Beschleunigungssensor ist und dass das System (22) so ausgelegt ist, dass es abhängig von sowohl einem Frontsensorsignal als auch einem Hecksensorsignal einen Frontalaufprall detektiert.

2. System nach Anspruch 1, wobei das System (22) so ausgelegt ist, dass es abhängig von sowohl einem Frontsensorsignal als auch einem Hecksensorsignal sowohl einen Frontalaufprall als auch einen Heckaufprall detektiert.

3. System nach Anspruch 1, wobei mindestens ein Bestandteil der Messachse des Beschleunigungssensors parallel zu einer Fahrzeugslängsachse (L) angeordnet ist.

4. System nach einem der vorhergehenden Ansprüche, wobei die Auswerteeinrichtung (23) so ausgelegt ist, dass sie verschiedene Arten von Ereignissen anhand von verschiedenen Zuständen der Front- und Hecksensorsignale einordnet.

5. System nach Anspruch 4, wobei die Auswerteeinrichtung (23) so ausgelegt ist, dass sie einen Aufprall hoher Heftigkeit von einem Aufprall geringer Heftigkeit unterscheidet.

6. System nach Anspruch 4 oder 5, wobei die Auswerteeinrichtung (23) so ausgelegt ist, dass sie ein Nicht-Aufprallereignis von einem Aufprall unterscheidet.

7. System nach einem der Ansprüche 4 bis 6, wobei die Auswerteeinrichtung (23) so ausgelegt ist, dass sie die verschiedenen Arten von Ereignissen auf der Grundlage der Amplitude und des Zeitpunkts der Front- und Hecksensorsignale einordnet.

8. System nach einem der vorhergehenden Ansprüche, wobei die Auswerteeinrichtung (23) so ausgelegt ist, dass sie ein Bestätigungssignal aus dem Front- oder Hecksensorsignal berechnet.

9. System nach einem der vorhergehenden Ansprüche, wobei das System (22) ferner Seitenaufprallsensoren (13, 14) umfasst.

10. System nach einem der vorhergehenden Ansprüche, wobei alle Aufprallsensoren (11-14) des Systems (22) außerhalb eines mittigen Bereichs (21) des Fahrzeugs (10) angeordnet sind.

## Revendications

1. Système (22) pour la détection de l'impact d'une voiture (10), comprenant au moins un capteur avant (11) situé sur ou près d'une extrémité avant de la voiture (10) et adapté pour générer un signal de capteur avant en réaction à un impact de voiture, ledit capteur avant (11) étant un accéléromètre, au moins un capteur arrière (12) situé sur ou près d'une extrémité arrière de la voiture (10) et adapté pour générer un signal de capteur arrière en réaction à un impact de voiture, et un dispositif d'évaluation (23) adapté pour générer un signal d'activation pour activer au moins un dispositif de sécurité (26, 27, 28) en réaction à la réception d'un signal de capteur, ledit dispositif d'évaluation (23) étant adapté pour générer un signal d'activation pour activer au moins un dispositif de sécurité (26, 27, 28) si une condition prédéterminée en fonction d'un signal de capteur avant et d'un signal de capteur arrière est remplie, et ledit système (22) étant adapté pour détecter un impact arrière en fonction d'un signal de capteur avant et d'un signal de capteur arrière, **caractérisé en ce que** ledit capteur arrière (12) est un accéléromètre et ledit système (22) est adapté pour détecter un impact frontal en fonction d'un signal de capteur avant et d'un signal de capteur arrière.

2. Système selon la revendication 1, ledit système (22) étant adapté pour détecter un impact frontal et un impact arrière en fonction d'un signal de capteur avant et d'un signal de capteur arrière.

3. Système selon la revendication 1, ledit accéléromètre présentant au moins une composante de son axe de sensibilité agencée parallèle à un axe de voiture longitudinal (L).

4. Système selon l'une quelconque des revendications précédentes, ledit dispositif d'évaluation (23) étant adapté pour classer différents types d'événements à partir de différentes conditions desdits signaux de capteur avant et arrière.

5. Système selon la revendication 4, ledit dispositif d'évaluation (23) étant adapté pour distinguer un impact de gravité élevée d'un impact de gravité faible.

6. Système selon la revendication 4 ou 5, ledit dispositif d'évaluation (23) étant adapté pour distinguer un événement de non impact d'un impact.

7. Système selon l'une quelconque des revendications 4 à 6, ledit dispositif d'évaluation (23) étant adapté pour classer lesdits différents types d'événements sur la base de l'amplitude et du moment desdits signaux de capteur avant et arrière.

8. Système selon l'une quelconque des revendications précédentes, ledit dispositif d'évaluation (23) étant adapté pour calculer un signal de confirmation à partir de l'un desdits signaux de capteur avant ou arrière.

9. Système selon l'une quelconque des revendications précédentes, ledit système (22) comprenant en outre des capteurs d'impact latéral (13, 14).

10. Système selon l'une quelconque des revendications précédentes, tous les capteurs d'impact (11-14) dudit système (22) étant agencés à l'extérieur d'une zone centrale (21) de la voiture (10).
